# EUROPÄISCHE PATENTSCHRIFT

(11) **EP 0 676 057 B1**
(45) Veröffentlichungstag und Bekanntmachung des Hinweises auf die Patenterteilung: **02.05.1997**
(21) Anmeldenummer: 93924016.4
(22) Anmeldetag: 02.11.1993
(51) Int. Cl.: G01S 17/46, G01S 17/89

(54) **VERFAHREN UND VORRICHTNG ZUM AUFNEHMEN EINES ENTFERNUNGSBILDES**
PROCESS AND DEVICE FOR TAKING A DISTANCE IMAGE
PROCEDE ET DISPOSITIF PERMETTANT DE PHOTOGRAPHIER UNE IMAGE A DISTANCE

(30) Priorität: 15.12.1992 DE 4242189
(43) Veröffentlichungstag der Anmeldung: 11.10.1995
(73) Patentinhaber: LEICA SENSORTECHNIK GMBH, D-35539 Wetzlar (DE)
(72) Erfinder: WYROSTEK, Michael, D-45968 Gladbeck (DE); BORSCH, Manfred, D-35415 Pohlheim (DE); PFAFF, Reiner, D-35684 Dillenburg (DE); WINDPASSINGER, Roman, D-80809 München (DE)
(74) Vertreter: Stamer, Harald, Dipl.-Phys.
(86) Internationale Anmeldenummer: DE9301049
(87) Internationale Veröffentlichungsnummer: WO9414084

(56) Entgegenhaltungen:
- DE-A- 4 115 445
- FR-A- 2 582 106
- ELECTRONICS WEEK Bd. 57, Nr. 22 , 10. September 1984 , NEW YORK US Seiten 36 - 38 GOSCH 'With Radar-Like Ranging Technique, robots can see in three Dimensions'

## Beschreibung

Die Erfindung betrifft ein Verfahren zum Aufnehmen eines Entfernungsbildes nach dem aktiven Triangulationsprinzip gemäß dem Oberbegriff des Anspruchs 1 und eine Vorrichtung zur Durchführung des Verfahrens gemäß dem Oberbegriff des Anspruchs 3.

Aus der gattungsbildenden DE-41 15 445 A1 ist ein Verfahren zum Aufnehmen eines dreidimensionalen Bildes nach dem aktiven Triangulationsprinzip bekannt. Dabei wird mittels eines eine Optik sowie eine Codier- und Speichereinrichtung aufweisenden Laserprojektors auf das Objekt ein Code zur optisch-flächenhaften Objektmarkierung in Form von Lichtschnittebenen mit einer vorgegebenen Frequenz projiziert. Eine mit dem Projektor synchronisierte Videokamera ist mit einer Bildspeichereinrichtung versehen und nimmt das Objekt und die Objektmarkierungen auf. Der von der Codiereinrichtung erzeugte Code ist frei programmierbar und besitzt Anteile zum Steuern der Intensität des Lasers, einer Fokusverstelleinrichtung und der Ablenkung einer Ablenkeinrichtung für den Laserlichtstrahl. Der Fokus wird mit letzteren innerhalb des Codetaktes mitgeführt, wobei er einen vorgebbaren Bereich zur Bildschärfeeinstellung durchläuft. Der Code wird synchron der Videokamera zum Dekodieren zur Verfügung gestellt, wobei die Grauwerte der Bildfolge an derselben Bildkoordinate vom Dekodierer erkannt und einer bestimmten Lichtschnittebene im Kontinuum der projizierten Lichtschnittebenen zugeordnet werden, die die absoluten Koordinaten des betrachteten Objektpunktes des Objekts liefern. Dieses bekannte Verfahren und die entsprechende Vorrichtung eignen sich nur für statische Objekte. Zur Anpassung an verschiedene Arbeitsabstände ist während des Abscannens des Objektes mittels der Ablenkeinrichtung eine dynamische Fokussierung auf die mittlere Objekthöhe erforderlich, und zur Optimierung und Anpassung des Tiefenschärfebereichs an das Objekt bedarf es der getakteten Verstellung einer Blende.

Der Erfindung liegt die Aufgabe zugrunde, ein Verfahren der eingangs genannten Art anzugeben, das es ermöglicht, auch dynamische Objekte nahezu beliebiger Tiefenstaffelung in einer Szene zu erfassen und zu vermessen, ohne daß es einer Fokussierung bedarf, wobei Störlicht wirkungsvoll unterdrückt wird und die Messung in Echtzeit erfolgt. Weiterhin soll dazu eine Vorrichtung unter Verwendung weitgehend herkömmlicher Bauteile bereitgestellt werden, mit der dieses Verfahren durchführbar ist und die es ermöglicht, ein Entfernungsbild auch in nicht-kooperativer Umgebung eindeutig aufzunehmen.

Diese Aufgabe wird erfindungsgemäß durch die Merkmale der Ansprüche 1 und 3 gelöst. Vorteilhafte Ausgestaltungen und Weiterbildungen der Erfindung sind Gegenstand der Unteransprüche.

Das erhaltenen Entfernungsbild setzt sich somit aus einer Vielzahl von einzeln aufgenommenen Videobildern zusammen, wobei jedes derselben mit einer anderen Winkelstellung des Lichtsender aufgenommen wird. Durch die keilförmige Ausbildung des Laserstrahls ist die Abbildung in der Bildebene stets ein Reflex von gleicher Höhe und nur vom Keilwinkel und der Brennweite der Kameraoptik abhängig, eine Überlagerung von Reflexen tritt nicht auf.

Aufgrund des von der Laser-Lichtquelle, dem "Laser-Scanner" emmitierten Lichtkeils ist keine Fokussierung und somit auch keinerlei aufwendige Fokussiereinrichtung erforderlich, um Objekte in unterschiedlichen Entfernungen zu erfassen, sodaß deren Tiefe bzw. Tiefenstaffelung problemlos ist.

Schließlich ist das Scannen mit einem Lichtkeil geometrisch mit einem Stapeln von Keilen vergleichbar, wobei im Gesichtsfeld eine dichteste Packung entsteht, sodaß im Gegensatz zur bekannten Rasterung mit Zwischenräumen auch sehr kleine Objekte erfaßt werden.

Das Verfahren selbst läßt ich im wesentlichen folgendermaßen gliedern:
1. Der Scanner projiziert einen schmalen Laser-Lichtkeil in den Objektraum, wobei der Rechner den Scanvorgang von Winkelposition zu Winkelposition steuert, sodaß der projizierte Streifen zu einem definierten und bekannten Ausstrahlungswinkel des Scanners gehört und schrittweise das gesamte Gesichtsfeld überdeckt wird. Der Lichtkeil wird dabei für die Integrationszeit der CCD-Kamera in jeder Position gehalten, und die Positionierungszeit von Schritt zu Schritt ist je nach verwendetem Scanner < 1 ms.
2. Der Rechner startet den Integrationsvorgang der Kamera;
3. Der Rechner startet den Auslesevorgang der Bildinformation aus der Kamera;
4. Der Rechner bringt die Bildinformation in seinen Arbeitsspeicher und startet bereits wieder die Neupositionierung des Scanners.
5. Der Rechner führt die Reflexvermessung in seinem Arbeitsspeicher durch. Wesentlich ist dabei, daß hier jedem gesetzten Pixel genau ein Voxel im Objektraum entspricht, dessen drei Koordinaten nach einer Formel direkt berechnet werden können. Es existiert also eine eindeutige Abbildung zwischen den (X,Y,Z)-Koordinaten eines Voxels im Raum und den (x',y', )-Koordinaten) der Reflexvermessung, wobei(x',y') die Pixelkooordinaten in der Bildebene der Kamera sind und der momentane Scannerwinkel ist.
6. Diese Schritte werden solange wiederholt, bis das gesamte Gesichtsfeld abgedeckt ist. Die ausgegebenen Informationen können sodann revisualisiert, d.h. als Flächeninformationen perspektivisch und als Tiefeninformatioh farbkodiert sowie mit den Koordinatenangaben auf einem Bildschirm ausgegeben werden. Es versteht sich, daß die Weiterverarbeitung der Entfernungsbilder zur Objekterkennung an sich bekannt ist, primär zur Aufgabe eines Systemrechners gehört und dementsprechend nicht Gegenstand der Erfindung ist.

Die Erfindung betrifft außerdem eine Vorrichtung zum Aufnehmen eines Entfernungsbildes nach dem aktiven Triangulationsprinzip entsprechend dem Oberbegriff des Anspruchs 3.

Aus der DE-34 12 076 A1 ist eine Vorrichtung zur zweidimensionalen Vermessung von Lichtpunkten bekannt, wobei die Lichtpunkte von einem bewegten Laserstrahl nach Scanntechnik erzeugt werden und eine Kamera mit zwei Fotodiodenzeilen vorgesehen ist, die ausgelesen werden. Die beiden Fotodiodenzeilen sind getrennt voneinander in verschiedenen Bildebenen angeordnet. Mittels einer Abbildungsoptik wird der Lichtpunkt jeweils als Lichtbalken orthogonal auf den Fotodiodenzeilen abgebildet. Die Abbildungsoptik weist dazu neben einer Linsenoptik einen halbdurchlässigen Spiegel und zwei diesem nachgeordnete Zylinderlinsen auf, deren Achsen windschief zueinander angeordnet sind und die Koordinatenachsen des Lichtpunktes festlegen. Zur dreidimensionalen Vermessung sind eine weitere Linsenoptik und ein Oberflächenspiegel erforderlich, wobei sich zwei Koordinatenpaare ergeben, die voneinander unterschieden werden müssen.

Aus der bereits genannten DE-41 15 445 A1 ist weiterhin eine Vorrichtung zum Aufnehmen eines dreidimensionalen Bildes eines Objektes entsprechend dem Gattungsbegriff des Anspruchs 3 bekannt. Da es sich bei dem entsprechenden Verfahren um eine Laser-Linienfokussierung handelt, erfordert diese bekannte Vorrichtung eine Autofokusverstelleinheit.

Diese wird im wesentlichen durch den fest in eine Tauchspule eingepaßten Halbleiterlaser gebildet, der bei Erregung der Tauchspule mit Wechselstrom mechanische Schwingungen vor und zurück in Richtung der Längsachse der Laserlichtstrahlen ausführt. Die der Laserlichtquelle nachgeschalteten beiden Zylinderlinsen und die dazwischen angeordnete Blende dienen zur Erzeugung des Linienbildes bzw. zur Anpassung des Tiefenschärfebereichs an das Objekt. Wie bereits ausgeführt, beruht diese bekannte Vorrichtung auf einer dynamischen Fokussierung und eignet sich nur für statische Objekte.

Durch den Aufsatz von H.K. Tönshoff, M. Seidel und J.-C Greulich, "A Triangulation Sensor Measuring 5 Degrees of Freedom for Contour Tracking and Automatic Programming of Industrial Robots", in der Zeitschrift "Vision & Voice Magazine", Vol.6, Nr.4, Oktober 1992, Seiten 279-282, ist schließlich ein Triangulations-Sensor zur Vermessung des Profils von Plastikerzeugnissen in fünf Freiheitsgraden bekannt geworden. Dazu wird mittel eines Miniatur-Diaprojektors ein breiter Lichtstreifen auf das Werkstück projiziert, das Graubild des Streifens mittels einer CCD-Kamera aufgenommen und durch einen PC verarbeitet, wobei die Höhe des Werkstücks relativ zu einer Bezugsebenen durch Triangulation an vier Punkten gemessen wird. Die Werkstücke werden auf einem Fließband unter der ortsfesten und unbewegten Projektions- und Aufnahmevorrichtung vorbeibewegt, und der Höhenmeßbereich liegt bei 8 mm. Diese bekannte Vorrichtung dient zur automatischen Optimierung von Roboter-Bewegungsbahnen für das Entgraten von Kunststoff-Werkstücken und eignet sich nicht zur Aufnahme von Entfernungsbildern dynamischer Objekte größerer Tiefenstaffelung in nichtkooperativer Umgebung.

Mittels der erfindungsgemäßen Vorrichtung wird einerseits ein keilförmig ausgebildeter Laserstrahl erzeugt und andererseits eine weitgehend gleichmäßige Helligkeitsverteilung über die gesamte Keilbreite sichergestellt, d.h. eine Vignettierung sowie ein natürlicher Helligkeitsabfall zum Rand hin werden vermieden. Zur weitgehenden Ausschaltung von Fremd- und Störlicht ist nach einem weiteren Teilmerkmal von Anspruch 3 ein Interferenzfilter im Strahlengang des Kameraobjektivs vorgesehen, wobei das Kameraobjektiv selbst in der angegebenen Art und Weise ausgebildet und eine elektronische Schaltung am Ausgang der Kamera vorgesehen ist, welche die Videobilder paarweise aufeinanderfolgend zwischenspeichert und durch Subtraktion des vorhergehenden vom aktuellen Videobild eindeutige Signale erzeugt. Auf diese Weise wird erreicht, daß ausschließlich Reflexe der Laser-Lichtquelle berücksichtigt werden und die Funktionsfähigkeit der erfindungsgemäßen Vorrichtung auch in nicht-kooperativer Umgebung gewährleistet ist. In diesem Zusammenhang ist zu bemerken, daß es bekannt ist, zur Erfassung räumlicher Abweichungen von einer glatten Ebene an Oberflächen von Gegenständen die reflektierten Lichtstrahlen mittels einer Kamera aufzunehmen und deren Bildsignale hinsichtlich der Helligkeits- und Kontrastunterschiede auszuwerten, indem das Videosignal durch Subtraktion zweier Bildsignale einer Kontrasterhöhung unterworfen oder das Videosignal eines unscharfen Bildes vom Videosignal eines scharfen Bildes subtrahiert wird (DE-30 21 448 A1). Die Erfindung setzt indessen die an sich zur Erkennung von Oberflächenstrukturen bekannte Maßnahme des digitalen Referenzbildverfahrens zur Aufnahme von Entfernungsbildern nach dem Triangulationsprinzip ein.

Als Rechner ist grundsätzlich jeder handelsübliche Computer (auch PC) einsetzbar, der mit den notwendigen Schnittstellen zum Datenaustausch mit den vorrichtungsspezifischen Unterbaugruppen ausgerüstet werden kann. Vorteilhaft für eine besonders schnelle (mehrere Entfernungsbilder pro Sekunde) Arbeitsweise in rauher Industrie-Umgebung ist ein VME-Bus System mit z.B. einer MC-68040 basierten Rechnerkarte.

Weitere Einzelheiten der Erfindung gehen aus der nachfolgenden Beschreibung eines in der Zeichnung schematisch dargestellten Ausführungs- und dreier Anwendungsbeispiele hervor.
Es zeigen:
- Fig. 1: eine perspektivische, prinzipielle Darstellung der erfindungsgemäßen Vorrichtung und ein damit erzeugtes Videobild,
- Fig. 2: den Strahlengang des Weitwinkelteils der der Lichtquelle nachgeschalteten Optik im Längsschnitt
- Fig. 3: einen Längsschnitt des Objektivs der CCD-Kamera
- Fig. 4: ein Blockschaltbild für das digitale Differenzbildverfahren und
- Fig. 5 a-c: drei Anwendungsbeispiele für die erfindungsgemäße Vorrichtung.

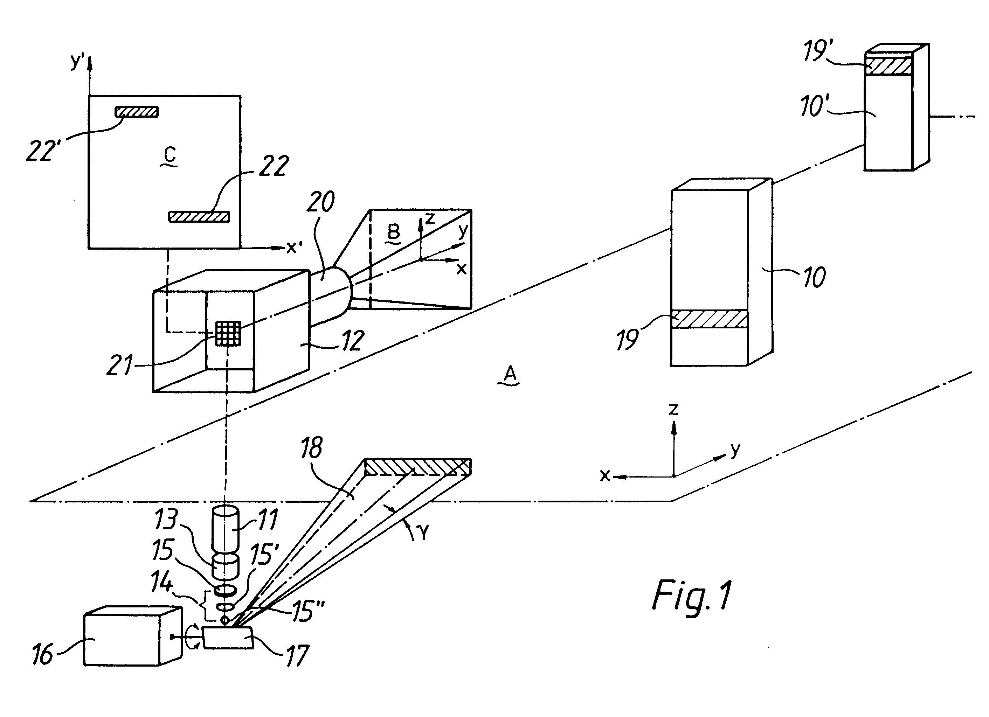

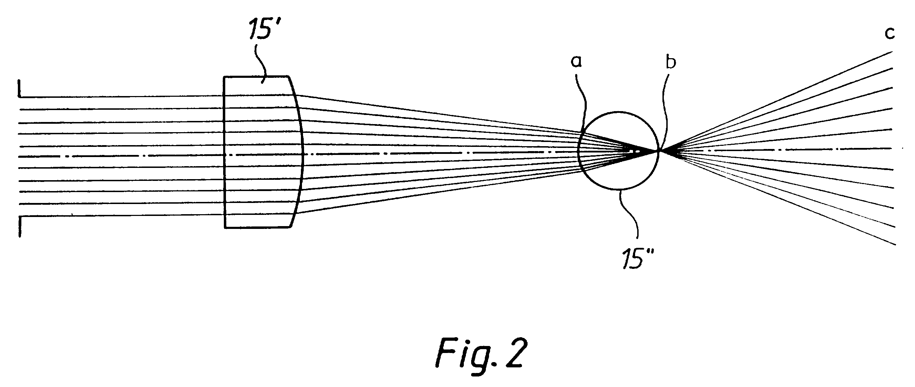

In Fig.1 sind in einem Objektraum A mit den Koordinaten x,y,z zwei identische, tiefengestaffelte Objekte 10, 10' angeordnet, von denen ein dreidimensionales Bild nach dem aktiven Triangulationsprinzip aufgenommen werden soll. Dazu sind ein Lichtsender 11 und eine CCD-Kamera 12 in einem bestimmten, bekannten Abstand voneinander angeordnet, der die Meßbasis bildet. Als Lichtsender 11 ist eine handelsübliche Laserdiode mit 810 nm Wellenlänge sowie 30 mW Leistung verwendet, der ein Kollimator 13 sowie eine Laseroptik 14 nachgeschaltet sind. Die Laseroptik 14 umfaßt eine erste Zylinderlinsengruppe 15, die eine schmale keilförmige Ausbildung des Laserstrahls bewirkt, und eine zweite Zylinderlinsengruppe 15' für den breiten Winkel des Laserkeils, die anhand von Fig.2 noch näher erläutert wird. Der Laserstrahl wird mittels eines von einem galvanischen Scanner 16 angetriebenen Scannerspiegels 17 schrittweise abgelenkt, sodaß im Objektraum A ein schmaler Lichtkeil 18 mit dem momentanen Keilwinkel aufgespannt wird. An den Objekten 10, 10' entstehen durch diese schrittweise Abtastung des Objektraumes A Scanstreifenreflexe 19, 19', welche von der CCD-Kamera 12 aufgenommen werden.

Als CCD-Kamera 12 ist eine gleichfalls handelsübliche, hochempfindliche Kamera verwendet, wie sie beispielsweise von der Dalsa Inc. unter der Bezeichnung 'Turbosensor'CA-D1-0256 vertrieben wird. Aus Gründen der übersichtlicheren Darstellung ist das auf den Objektraum A gerichtete Gesichtsfeld B der Kamera 12 außerhalb desselben gezeichnet, wobei der Höhen-Keilwinkel des Laserstrahls der Zeilenzahl der Kamera und deren Gesichtsfeld angepaßt ist. Eine Zeile der Kamera 12 "sieht" einen Elevationswinkelbereich, der sich als Quotient aus Gesichtsfeldelevation und Zeilenzahl der Kamera ergibt; beträgt die Zeilenzahl der Kamera 12 beispielsweise 256 und die Gesichtsfeldelevation 25,6°, so beträgt der Höhen-Keilwinkel für die höchstmögliche Auflösung 0,1°. Bei höher gewünschter Scangeschwindigkeit versteht es sich, daß dieser Winkel auch größer eingestellt werden kann.

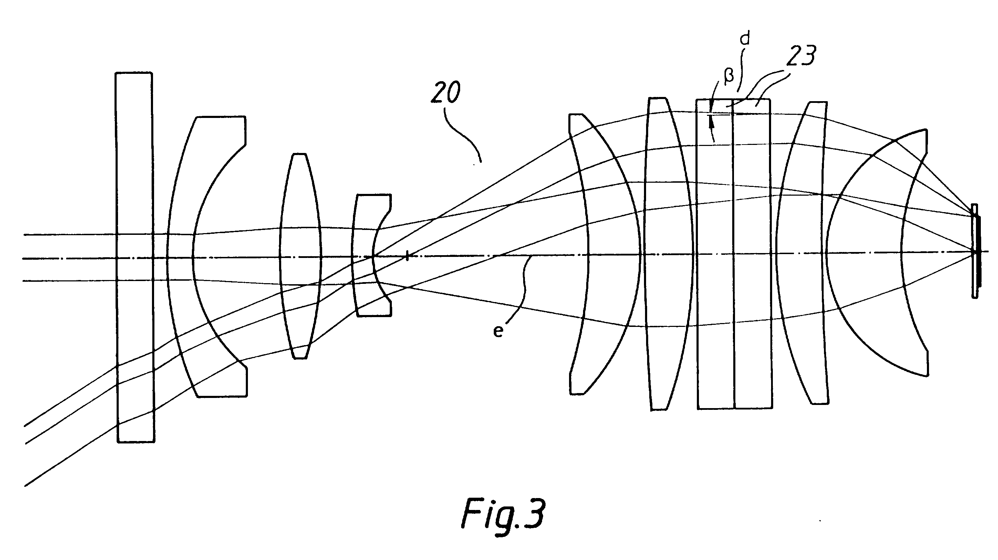

Mittels eines an der Kamera 12 befestigten Objektivs 20, das anhand von Fig.3 näher erläutert wird, erfolgt die Abbildung des Gesichtsfeldes auf einem CCD-Chip 21; die Abbildung ist als Binärbild C mit den Koordinaten x',y' und den entsprechenden Reflexbildern 22, 22' vergrößert dargestellt.

Zum besseren Verständnis der Wirkung des keilförmig ausgebildeten Laserstrahls sind lediglich zwei identische Objekte 10, 10' im Objektraum A vorgesehen. Ähnlich dem menschlichen Auge wird das entferntere Objekt 10' kleiner gesehen. Der Keil hebt diesen Verkleinerungseffekt wieder auf, und es ist im Binärbild C zu erkennen, daß beide Reflexbilder 22, 22' die gleiche Höhe aufweisen, das hintere Bild 22' des weiter entfernten Objekts 10' lediglich weniger breit ist.

In Fig.2 ist die den weitwinkeligen Strahlenanteil erzeugende Linsengruppe aus einer Zylinderlinse 15' und einer Stablinse 15" gezeigt, die beide die gleiche Brechzahl und sphärische Oberflächen aufweisen. Der kollimierte Laserstrahl durchdringt die Zylinderlinse 15', welche einen großen Öffnungsfehler erzeugt. Dadurch sind die Randbüschel an der optischen Fläche a der Stablinse 15" wesentlich dichter zusammengedrückt als die Büschel in Nähe der optischen Achse, bilden allerdings auch größere Winkel mit der optischen Fläche a. Dies hätte zur Folge, daß hinter dem Fokus b einer einzelnen Linse vom Typ der Zylinderlinse 15' die Randstrahlen sehr viel stärker divergieren als diejenigen in Achsnähe (spärischer Öffnungsfehler). Für eine weitgehend gleichmäßige Helligkeitsverteilung über die gesamte Breite des Laser-Lichtkeils ist nun der Effekt der stärker komprimierten Randbüschel zu konservieren, während der gleichzeitige Effekt der größeren Winkel derselben zu kompensieren ist. Dies erfolgt mittels der Stablinse 15" an der optischen Fläche a als Eintrittsfläche, die für die Randstrahlen erheblich größere Eintrittsgradienten bereitstellt als für die Strahlen im Bereich der optischen Achse. Die damit verbundenen Gradientendifferenzen bewirken, daß die Winkel der Begrenzungsstrahlen wesentlich stärker beeinflußt werden als diejenigen in Achsnähe. Bei c ist diese Überkompensation des Öffnungsfehlers deutlich zu erkennen. Aus dieser erfindungsgemäßen Ausbildung der zweiten Zylinderlinsengruppe resultiert eine gleichmäßige Helligkeitsverteilung über die gesamte Breite des Laser-Lichtkeils.

Bei dem in Fig.3 gezeigten Objektiv 20 der CCD-Kamera 12 handelt es sich um ein 7-linsiges Weitwinkelobjektiv, welches numerisch derart optimiert wurde, daß in einem Bereich d innerhalb des Strahlengangs des Objektivs 20 alle Lichtbüschel unabhängig von ihrem ursprünglichen Feldwinkel einen genügend kleinen Winkel zur optischen Achse e bilden, um die Interferenzbedingung zu erfüllen. Der Winkel beträgt weniger als 5°, und in dem Bereich d ist ein schmalbandiges Interferenzfilter 23 angeordnet.

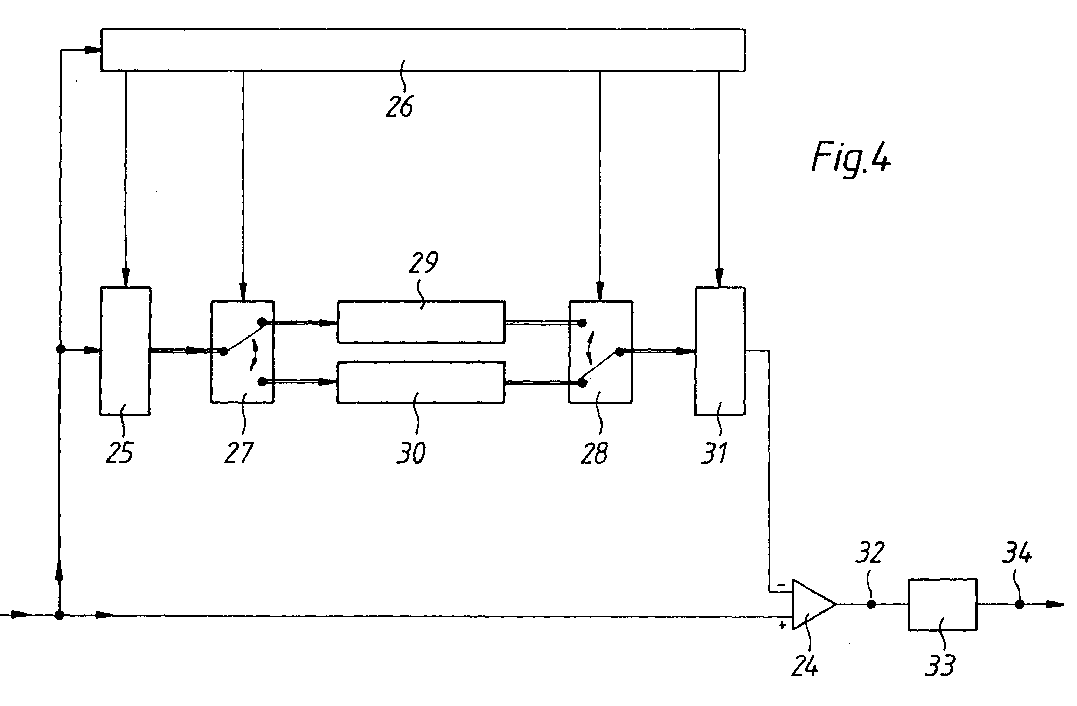

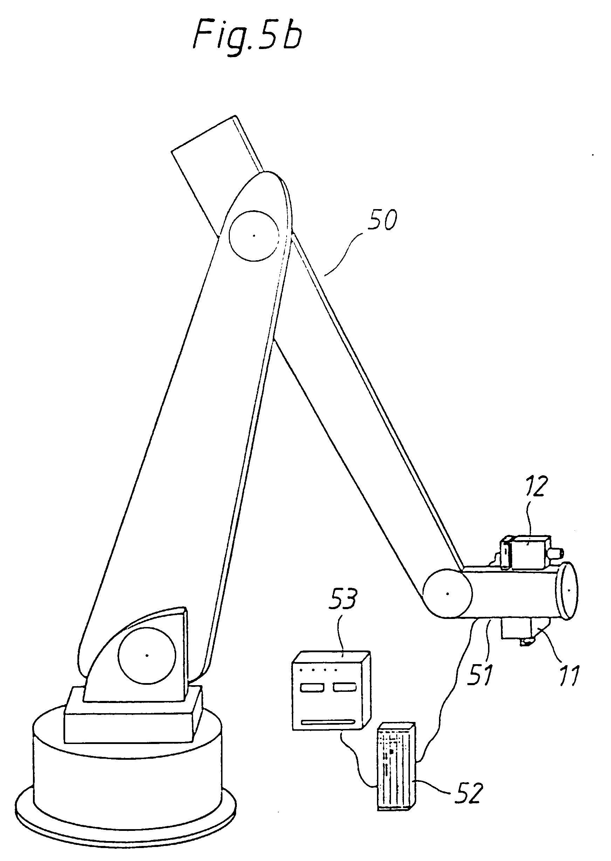

In dem Blockschaltbild gemäß Fig.4 tritt das von der CCD-Kamera 12 kommende analoge Videosignal einerseits in den nichtpositiven Eingang eines Operationsverstärkers 24 und andererseits zur Zwischenspeicherung in einen A/D-Wandler 25 ein. Der synchrone Anteil wird einer Steuerlogik 26 zugeführt. Der A/D-Wandler 25 ist Teil einer Bildzwischenspeichereinheit, die außerdem noch zwei Adreßumschalter 27,28, zwei Bildspeicher 29,30 und einen D/A-Wandler 31 umfaßt und das Videosignal digitalisiert. Das derart entstehende Digitalbild (8 bit) wird über den Adreßumschalter 27 in den digitalen Bildspeicher 29 (RAM) geschrieben. Auf der anderen Seite der digitalen Bildzwischenspeichereinheit 25,27-31 ist der D/A-Wandler 31 vorgesehen, der das digitale Bild aus dem Bildspeicher 30 mittels des Adreßumschalters 28 anwählt und in ein analoges Videosignal zurückverwandelt. Dieses enthält die Bildinformation des zuletzt vorher von der CCD-Kamera 12 aufgenommenen Videobildes, das in den invertierenden Eingang des Operationsverstärkers 24 eingespeist wird, sodaß dieser eine analoge Differenzbildung zwischen dem aktuellen Videobild und dem zuletzt aufgenommenen durchführt.

Dabei wird verbliebenes Reststörlicht, das in beiden Bildern gleichermaßen vorhanden ist, subtrahiert, und es werden nur die Unterschiede in den beiden Videobildern durchgelassen.

Da aufgrund des erfindungsgemäßen Verfahrens aufeinanderfolgende Videobilder mit unterschiedlichen Scanner-Winkelpositionen aufgenommen werden, wobei keine Überlappung stattfinden kann, bleiben in einem mit 32 bezeichneten Differenzbild noch einerseits im positiven elektrischen Spannungsbereich des Videosignals die Informationen des aktuellen Scanstreifenreflexes und andererseits im negativen elektrischen Spannungsbereich des Videosignals die Informationenen des Scanstreifenreflexes des vorausgehenden Bildes übrig. Der Anteil im negativen Spannungsbereich wird von einem schwellenprogrammierbaren Binärisierungskomparator 33, dessen Durchlaßschwellen programmierbar sind, zusammen mit etwa noch vohandenen Reststörungen herausgefiltert und in ein mit 34 bezeichnetes Binärbild umgewandelt. Dieses wird sodann einem hier nicht gezeigten Rechner zugeführt.

Beim sodann nächsten ankommenden Videobild schaltet die Steuerlogik 26 die Adreßumschalter 27,28 jeweils in ihre andere Position, sodaß die Lese- bzw. Schreibfunktionen der Bildspeicher 29,30 wechselweise vertauscht werden.

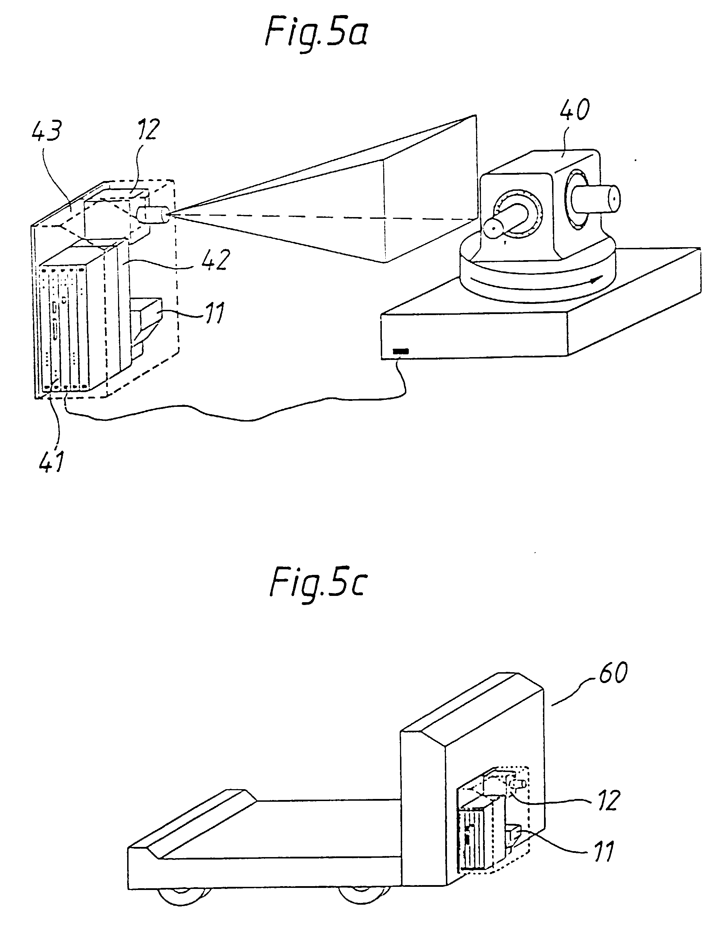

In den Fig. 5a-c sind Anwendungsbeispiele für die erfindungsgemäße Vorrichtung gezeigt.
Die Vorrichtung gemäß Fig. 5a dient der Aufnahme eines Entfernungsbildes eines zu vermessenden, drehbaren Objektes 40. Der Lichtsender 11 in Form eines Laser-Scanners und die CCD-Kamera 12 sind zusammen mit einer Elektronikbox 41 und einem Rechner 42 in einem gemeinsamen Gehäuse 43 angeordnet.

In Fig. 5b ist die erfindungsgemäße Vorrichtung als Führungsensor für einen Industrieroboter, einen sogenannten Knickarm-Roboter 50 eingesetzt. Lichtsender 11 und CCD-Kamera 12 sind hier auf gegenüberliegenden Flächen eines Auslegers 51 befestigt, und die Elektronikbox 52 sowie die Robotersteuerung 53 sind als jeweils getrennte Bauelemente vorgesehen.

Fig.5c schließlich zeigt ein autonomes Fahrzeug 60, dessen Führungssensor durch den Lichtsender 11 und die CCD-Kamera 12 gebildet ist.

Es versteht sich, daß zahlreiche weitere Anwendungen der erfindungsgeiäßen Vorrichtung möglich sind. So kann diese beispielsweise in der Werkstückprüfung zum Vermessen von Freiformflächen, in der WerkstückOberflächenprüfung, bei der Werkstückzuführung an Bearbeitungsmaschinen, bei der Vollständigkeitskontrolle in der industriellen Fertigung (Fließband), als Montageroboter oder bei der Gebäudeüberwachung eingesetzt werden.

## Patentansprüche

1. Verfahren zum Aufnehmen eines Entfernungsbildes nach dem aktiven Triangulationsprinzip, bei dem mittels eines Lichtsenders ein Laserstrahl in einen Objektraum projiziert, dieser schrittweise abgetastet wird und die Lichtreflexe als Videobilder mittels einer CCD-Kamera aufgenommen werden, wobei der Lichtsender und die Kamera einen jeweils bekannten Ausstrahlungswinkel bilden und ein Rechner die Bildinformationen aus der Kamera ausliest,
**dadurch gekennzeichnet,** daß der Laserstrahl keilförmig ausgebildet ist und zur Fremdlichtunterdrückung bei gleichzeitig großem Gesichtsfeld die von der CCD-Kamera ausgegebenen Videobilder innerhalb eines Entfernungsbildes paarweise aufeinanderfolgend als 2D-Bilder zwischengespeichert werden und anschließend das vorhergehende Videobild jeweils vom aktuellen Videobild subtrahiert und als Binärbild vom Rechner ausgelesen wird.

2. Verfahren nach Anspruch 1,
**dadurch gekennzeichnet,** daß der Höhen-Keilwinkel des Laserstrahls der Zeilenzahl der CCD-Kamera und deren Gesichtsfeld angepaßt ist.

3. Vorrichtung zum Aufnehmen eines Entfernungsbildes nach dem aktiven Triangulationsprinzip mit einem Lichtsender, der einen Laserstrahl in einen Objektraum projiziert und diesen schrittweise abtastet, einer die Lichtreflexe als Videobilder aus dem Objektraum aufnehmenden CCD-Kamera und einem die Bildinformationen aus der Kamera auslesenden Rechner, wobei als Lichtsender eine Laserdiode mit Kollimator verwendet ist, welcher Zylinderlinsen in zwei Gruppen nachgeschaltet sind,
**dadurch gekennzeichnet,** daß die erste Zylinderlinsengruppe (15) einen keilförmigen Laser-Lichtstrahl und die zweite Zylinderlinsengruppe (15',15") einen weitwinkeligen Strahlenanteil erzeugt, wobei letztere eine Überkompensation ihres Öffnungsfehlers aufweist derart, daß die Randstrahlen mit den optischen Flächen (a) steile Gradienten und große Einfallswinkel bilden, daß ein Kameraobjektiv (20) verwendet ist, bei dem in einem Bereich (d) des Strahlenganges sämtliche Lichtbüschel unabhängig von ihrem ursprünglichen Feldwinkel einen zur Erfüllung der Interferenzbedingung erforderlichen, genügend kleinen Winkel (γ) zur optischen Achse (e) bilden, wobei in diesem Bereich ein schmalbandiges Interferenzfilter (23) angeordnet ist, und daß am Kameraausgang eine elektronische Schaltung mit einem A/D-Wandler (25), zwei digitalen Bildspeichern (29,30), einem D/A-Wandler (31) und einem Steuerschaltkreis (26) sowie ein Addierer (24) vorgesehen sind.

4. Vorrichtung nach Anspruch 3,
**dadurch gekennzeichnet,** daß der elektronischen Schaltung ein schwellenprogrammierbarer Binärisierungskomparator (33) nachgeschaltet ist.

## Claims

1. Method of picking up a remote image according to the active triangulation principle in which a laser beam is projected by means of a light emitter into an object space, this is scanned in steps and the light reflexes are detected as video images by means of a CCD camera, wherein the light emitter and the camera form a respectively known radiation angle and a computer reads out the image data from the camera, characterised thereby that the laser beam is formed in wedge shape and for stray light suppression with simultaneously large viewing field the video images, which are delivered by the CCD camera, within a remote image are intermediately stored in pairs in succession as two-dimensional images and subsequently the previous video image is subtracted each time from the actual video image and read out by the computer as a binary image.

2. Method according to claim 1, characterised thereby that the wedge angle height of the laser beam is matched to the line number of the CCD camera and the viewing field thereof.

3. Device for picking up a remote image according to the active triangulation principle with a light emitter, which projects a laser beam into an object space and scans this in steps, a CCD camera detecting the light reflexes as video images from the object space and a computer reading out the image data from the camera, wherein a laser diode, downstream of which cylindrical lenses in two groups are connected, with collimator is used as light emitter, characterised thereby that the first cylindrical lens group (15) produces a wedge-shaped laser light beam and the second cylindrical lens group (15',15') produces a wide-angle beam component, wherein the latter exhibits an over-compensation of its aperture error in such a manner that the edge beams form with the optical surfaces (a) steep gradients and large angle of incidence, that a camera objective (20) is used in which in a region (d) of the beam path all light bunches form independently of their original field angle an angle (γ), which is sufficiently small for fulfillment of the requisite interference condition, relative to the optical axis (e), wherein a narrow-band interference filter (23) is arranged in this region, and that an electric circuit with an analog-to-digital converter (25), two digital image storage devices (29, 30), a digital-to-analog converter (31) and a control circuit (26) as well as an adder (24) are provided at the camera output.

4. Device according to claim 3, characterised thereby that a binarising comparator (33) programmable in threshold is connected downstream of the electronic circuit.

## Revendications

1. Procédé pour photographier une image à distance selon le principe de triangulation active, dans lequel au moyen d'un émetteur de lumière, un rayon laser est projeté dans un espace d'objet, celui-ci est exploré pas-à-pas et les reflets lumineux en tant qu'images vidéo sont photographiés au moyen d'une caméra à CCD, et l'émetteur de lumière et la caméra forment un angle de rayonnement connu et un calculateur lit les informations d'image de la caméra caractérisé en ce que le rayon laser est configuré en coin et pour la diminution de la lumière étrangère avec simultanément un grand champ visuel, les images vidéo données par la caméra à CCD à l'intérieur d'une image à distance sont mises en mémoire intermédiaire par paires se suivant sous la forme d'images bidimensionnelles et ensuite l'image vidéo précédente est à chaque fois soustraite de l'image vidéo actuelle et est lue en tant qu'image binaire par le calculateur.

2. Procédé selon la revendication 1, caractérisé en ce que l'angle du coin en hauteur du rayon laser est adapté au nombre de lignes de la caméra à CCD et à son champ visuel.

3. Dispositif pour photographier une image à distance selon le principe de triangulation active avec un émetteur de lumière qui projette un rayon laser dans un espace d'objet et explore celui-ci pas-à-pas, une caméra à CCD photographiant des reflets lumineux en tant qu'images vidéo de l'espace d'objet, et un calculateur lisant les informations d'image de la caméra, où l'on utilise, en tant qu'émetteur de lumière, une diode à laser avec collimateur, qui est suivie de lentilles cylindriques en deux groupes,
caractérisé en ce que le premier groupe de lentilles cylindriques (15) produit un rayon de lumière laser en forme de coin et le second groupe de lentilles cylindriques (15', 15") produit une partie des rayons sur grand angle, qui présente un excès de compensation de son défaut d'ouverture de manière que les rayons de bordure forment avec la surface optique (a) des gradients raides et un grand angle d'impact, en ce qu'un objectif de caméra est utilisé dans lequel les faisceaux lumineux dans une zone (d) de la marche des rayons forment indépendamment de leur angle de champ d'origine, un angle suffisamment petit (γ) par rapport à l'axe optique (e) pour remplir la condition d'interférence, et dans cette zone, un filtre d'interférence (23) à bande étroite est agencé, et en ce qu'à la sortie de la caméra est prévu un circuit électronique avec un convertisseur analogique/numérique (25), deux mémoires numériques de l'image (29, 30), un convertisseur numérique/analogique (31) et un circuit de commande (26) ainsi qu'un additionneur (24).

4. Dispositif selon la revendication 3, caractérisé en ce que le circuit électronique est suivi d'un comparateur (33) de mise sous forme binaire dont les seuils sont programmables.
